# FASCICULE DE BREVET EUROPEEN

(11) **EP 0 542 614 B1**
(45) Date de publication et mention de la délivrance du brevet: **11.10.1995**
(21) Numéro de dépôt: 92403028.1
(22) Date de dépôt: 10.11.1992
(51) Int. Cl.: H02G 1/12

(54) **Pince à dénudage thermique**
Thermische Abisolierzange
Thermal stripping pliers

(30) Priorité: 15.11.1991 FR 9114104
(43) Date de publication de la demande: 19.05.1993
(73) Titulaire: AEROSPATIALE Société Nationale Industrielle, 75781 Paris Cédex 16 (FR)
(72) Inventeur: Pierrot, Michel, F-78130 Les Mureaux (FR)
(74) Mandataire: Dubois-Chabert, Guy

(56) Documents cités:
- FR-A- 2 189 903
- US-A- 3 139 777

## Description

La présente invention concerne une pince pour dénuder thermiquement des fils ou des câbles électriques. Elle trouve de nombreuses applications dans les domaines de l'électronique et de l'électricité dans lesquels la plupart des branchements entre composants électroniques et/ou appareils électriques nécessitent le dénudage de fils ou câbles électriques.

Le dénudage de fils ou de câbles électriques consiste à retirer, à au moins une extrémité du fil (ou câble), la matière isolante entourant les brins du conducteur électrique, ces brins étant appelés également âme du conducteur.

De nombreuses sortes de pinces à dénuder sont actuellement connues, notamment les pinces à dénudage thermique telles que les dénudeurs thermiques déposés sous les marques "P. B. 150", et "P. B. 150 M" par la société TMC. La dénudeuse thermique DT4 de la société DUBBAR ELECTRONIQUE FRANCE comporte, comme la plupart de ces pinces à dénudage thermique, deux poignées articulées sur lesquelles sont montées des tiges électriquement conductrices. Sur ces tiges sont fixés des couteaux chauffés électriquement, ou des électrodes. Au contact de ces électrodes, une empreinte est réalisée dans l'isolant électrique ; l'isolant électrique peut alors être retiré du conducteur électrique, laissant les brins du conducteur à nu.

Le contact de ces électrodes sur le câble (ou fil) électrique à dénuder est établi par une pression de la main de l'opérateur sur les deux poignées de la pince de façon à resserrer ces deux poignées et donc rapprocher les deux électrodes et permettre le contact entre lesdites électrodes et le câble électrique ayant été introduit par l'opérateur entre ces deux électrodes. Une butée réglable située entre les deux poignées permet de déterminer une valeur minimale de l'écartement souhaité entre les électrodes, à la fermeture de la pince. Ce réglage de la butée permet de dénuder des câbles et fils de sections différentes.

Il existe, cependant, de forts risques d'entailler les conducteurs électriques. En effet, le réglage de la butée nécessite une grande précision de la part de l'opérateur pour obtenir un écartement optimal entre les deux électrodes. Il arrive fréquemment que la force d'application des électrodes sur le câble ne soit pas maîtrisée et que des brins du conducteur soient entaillés, voire sectionnés.

Cette pince à dénuder de l'art antérieur présente, de plus, l'inconvénient d'un dénudage complexe des câbles blindés surgainés, et principalement lorsque ces câbles sont multiconducteurs. En effet, ces câbles ne sont pas cylindriques et nécessitent, le plus souvent, d'appliquer deux fois les électrodes sur ledit câble afin de réaliser des empreintes sur le contour (ou sur une partie du contour du câble). Le câble n'étant pas cylindrique, il faut, pour chaque application des électrodes sur le câble, modifier le réglage de la butée. Il est donc difficile de conserver un écartement constant des électrodes pour répéter une même opération sur plusieurs câbles identiques, ou même sur deux extrémités d'un même câble.

De plus, la force d'application des électrodes sur le câble étant dépendante de la force appliquée par l'opérateur sur les poignées, il est difficile, pour cet opérateur, d'effectuer une empreinte régulière sur tout le contour du câble en effectuant une rotation dudit câble entre les électrodes.

Le document US-A-3 139 777 décrit également une pince à dénuder. Cette pince comporte deux bras de serrage, sur les côtés extérieurs desquels sont montées deux lames de ressort. Deux couteaux chauffants sont disposés, chacun à une extrémité libre de l'une des lames de ressort. Ces couteaux chauffants sont aptes à faire fondre la gaine du fil à dénuder introduit dans la pince. Chaque bras de serrage comporte, sur son côté intérieur, un ergot ainsi qu'un orifice dans lequel peut s'introduire l'ergot du bras de serrage opposé. Lorsque les bras de serrage sont rapprochés, chacun des ergots traverse le bras de serrage opposé et agit par pression sur la lame de ressort pour maintenir un écart minimum entre les deux couteaux chauffants.

Une telle pince à dénuder ne permet cependant pas de réaliser une empreinte de fusion sur toute la circonférence de l'isolant du câble à dénuder. Aussi, plusieurs pressions successives des électrodes sur le câble sont nécessaires. Or, l'effort d'application des couteaux chauffants sur le câble, via la pression réalisée par l'utilisateur sur les bras de serrage, étant difficilement maîtrisable, l'empreinte réalisée sur le contour de l'isolant peut difficilement être constante, ce qui rend délicate l'extraction dudit isolant.

Aussi, les inconvénients décrits ci-dessus ont pour conséquence d'augmenter le risque d'entailler ou de sectionner des brins du conducteur. Il y a aussi de forts risques de dégradation du revêtement métallique de l'âme du conducteur. De plus, dans le cas de câbles blindés, il y a des risques de transmission de contraintes mécanicothermiques excessives aux isolants de ces câbles, ce qui peut créer des défauts d'isolement ou des courts-circuits entre âmes et blindages. En outre, dans le cas de câbles coaxiaux, l'impédance caractéristique dudit câble peut se dégrader sous l'effet d'une agression du diélectrique.

La présente invention a justement pour but de remédier à ces inconvénients en proposant une pince à dénudage thermique permettant d'appliquer, sur le câble, les électrodes avec une force indépendante de la force d'application exercée par l'opérateur sur les poignées. La force d'application des électrodes sur le câble est alors reproductible, adaptable à la nature du câble à dénuder et constante lors de rotations d'un câble non cylindrique entre les électrodes.

De façon plus précise, l'invention a pour objet une pince pour dénuder des câbles (ou fils) électriques comportant au moins deux éléments chauffants; des moyens de serrage pour rapprocher les éléments chauffants; des moyens de liaison pour établir une liaison souple entre un premier élément chauffant et les moyens de serrage ; et
caractérisé en ce qu'elle comprend :
- des moyens élastiques agissant entre les moyens de serrage et le premier élément chauffant pour maintenir cet élément chauffant dans une position rapprochée de l'autre élément chauffant et permettre un mouvement de recul du premier élément chauffant par rapport à l'autre élément chauffant afin de limiter la force de contact entre les éléments chauffants et le câble électrique à une force prédéterminée;
- des moyens de butée limitant le mouvement de recul du premier élément chauffant à une valeur prédéterminée.

De plus, les moyens élastiques comportent une lame de ressort.

Selon un mode de réalisation de l'invention, les moyens de liaison comportent une articulation assurant l'assemblage du premier élément chauffant sur les moyens de serrage.

Selon un autre mode de réalisation, les moyens de liaison comportent une lame souple fixée entre le premier élément chauffant et les moyens de serrage.

De façon plus précise, les moyens de serrage comportent deux poignées articulées sur lesquelles sont montées au moins deux tiges électriquement conductrices.

Avantageusement, la pince peut comporter au moins une butée réglable située entre les deux poignées.

Dans un mode de réalisation de l'invention, les éléments chauffants sont des électrodes.

Dans un autre mode de réalisation, les éléments chauffants sont des couteaux chauffants.

D'autres avantages et caractéristiques de l'invention ressortiront de la description qui va suivre, donnée à titre illustratif, mais nullement limitatif, en référence aux dessins annexés dans lesquels :
- la figure 1 est une vue en perspective de la pince à dénuder selon l'invention, dans sa position de repos ;
- la figure 2 représente, vue de profil, une partie de ladite pince et, plus précisément, les moyens élastiques et les moyens de liaison souple lors du dénudage d'un câble ;
- la figure 3 représente, vue de profil, la même partie de la pince que sur la figure 2 selon le second mode de réalisation des moyens de liaison souple.

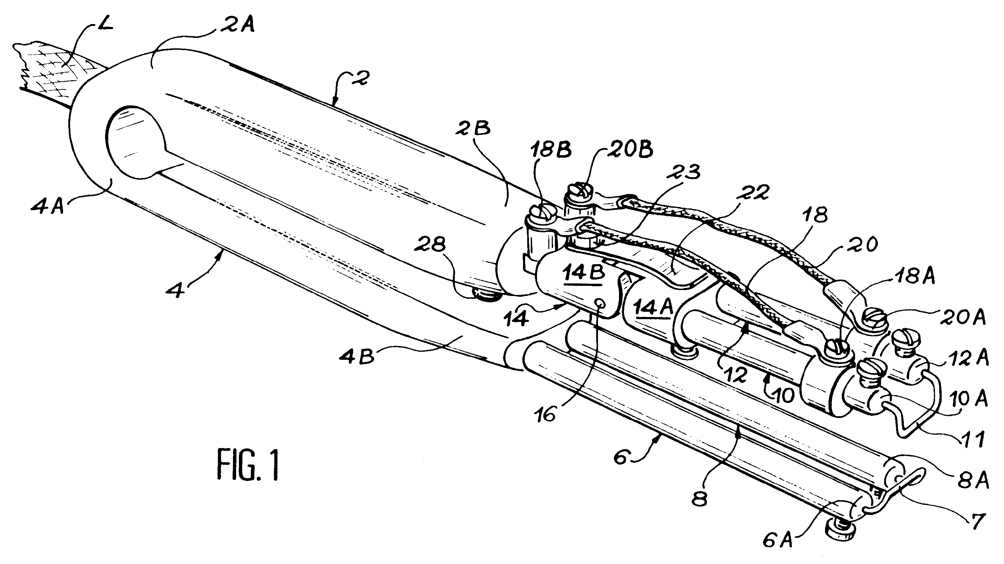

Sur la figure 1, on a représenté, en perspective, un schéma de la pince à dénuder de l'invention. Cette pince à dénuder comprend deux poignées 2 et 4 articulées en leur extrémité respective 2A et 4A. On nommera "poignée supérieure", la poignée 2 et "poignée inférieure", la poignée 4. Sur l'extrémité 2B de la poignée supérieure 2, sont montées deux tiges supérieures, référencées 10 et 12. Sur l'extrémité 4B de la poignée inférieure 4, sont montées deux tiges inférieures 6 et 8. Ces tiges 10, 12 et 6, 8 sont montées par paire sur chacune des poignées 2 et 4. Sur les extrémités libres 10A, 12A, 6A, 8A de ces deux paires de tiges 10/12 et 6/8, sont montés des éléments chauffants supérieur et inférieur, référencés respectivement 11 et 7. Chacun de ces éléments chauffants 11, 7 est connecté à une extrémité de chacune des tiges de la paire de tiges respectives 10/12 et 6/8.

Ces éléments chauffants 7 et 11 peuvent être, selon un mode de réalisation, des électrodes.

Selon un autre mode de réalisation, ces éléments chauffants 7 et 11 peuvent être des couteaux chauffants.

Dans l'exemple que l'on décrira tout au long de cette description, on prendra, comme éléments chauffants 7 et 11, des électrodes.

Ces électrodes 7 et 11 agissent sur le câble introduit dans la pince par effet thermique. Aussi, ces électrodes 7 et 11 doivent être électriquement alimentées. La pince est donc connectée à une alimentation électrique, non représentée sur la figure. La liaison électrique L relie ladite alimentation électrique à la pince et, plus précisément, aux électrodes 7 et 11, par l'intermédiaire des tiges 6/8 et 10/12, ces tiges étant au moins en partie électriquement conductrices.

La liaison électrique L reliant l'alimentation électrique à la pince, s'introduit en partie dans la poignée inférieure 4 et est connectée sur les tiges 6 et 8 réalisées dans un matériau électriquement conducteur. De cette façon, l'électrode 7 fixée sur les tiges 6 et 8 est alimentée électriquement depuis l'alimentation électrique.

Chaque tige 10, 12 comporte une première partie 10A, 12A et une seconde partie, non visible sur la figure. La seconde partie est fixe par rapport à la poignée 2 ; on la nomme partie fixe ; la première partie 10A, 12A est mobile et appelée partie mobile ; les parties fixe et mobile sont articulées par une liaison souple 16. Un bloc isolant 14 entoure les parties fixes et mobiles des tiges 10 et 12, autour de la liaison souple 16. Ce bloc isolant 14 comprend une première partie 14B, fixe par rapport à la poignée supérieure 2, et une seconde partie 14A solidaire des parties mobiles 10A, 12A des tiges 10, 12. Les parties 14A et 14B du bloc isolant 14 sont également articulées par la liaison souple 16.

Sur cette figure 1, la liaison souple 16 est une articulation et, plus précisément, un axe permettant une rotation des parties mobiles 14A, 10A, 12A, du bloc isolant 14 et des tiges 10 et 12 par rapport à la poignée 2.

L'alimentation en électricité de l'électrode 11 est réalisée par l'intermédiaire de fils conducteurs 18 et 20, connectés, d'une part, sur les parties mobiles 10A, 12A des tiges 10 et 12 par des moyens de connexion 18A et 20A et connectés, d'autre part, sur les parties fixes des tiges 10 et 12 par des moyens de connexion 18B et 20B. Ces fils conducteurs 18 et 20 sont connectés à la source d'alimentation par l'intermédiaire de la liaison L qui s'introduit en partie dans la poignée supérieure 2 pour être connectée à la partie fixe des tiges 10 et 12. Ils assurent l'alimentation en électricité de l'électrode 11 : en effet, les blocs 14A et 14B étant de nature isolante et, de plus, articulés en 16, la conduction électrique vers l'électrode 11 par les tiges 10 et 12 est interrompue, ce qui nécessite l'existence des fils conducteurs 18 et 20.

Sur cette figure 1, on a représenté également les moyens élastiques permettant, d'une part, de remettre en position de repos la partie mobile des tiges 10 et 12 et, d'autre part, d'établir un contact quasi-constant entre les électrodes 7 et 11 et le câble à dénuder lorsque celui-ci est introduit dans la pince.

Ces moyens élastiques comportent une lame de ressort 22 fixée par des moyens de fixation 23 sur la partie fixe 14B du bloc isolant 14 et en appui sur la partie mobile 14A dudit bloc isolant 14. Ils permettent de rendre indépendante la force d'application des électrodes sur le câble par rapport à la force d'application de l'opérateur sur les poignées 2 et 4.

La pince à dénuder représentée sur la figure 1 comprend de plus une butée 28 située entre les deux poignées supérieure 2 et inférieure 4. Cette butée de réglage 28 est réglable et permet notamment de régler le minimum de l'écartement souhaité entre les deux poignées de la pince et donc entre les deux paires de tiges 6/8 et 10/12.

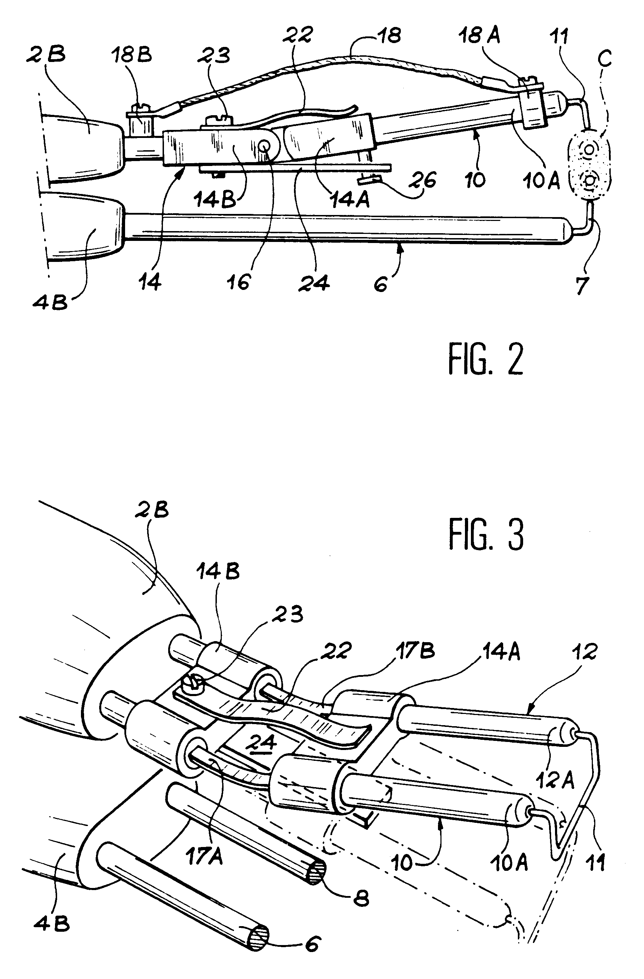

Sur la figure 2, on a représenté, vue de côté, une partie de la pince à dénuder, à savoir les tiges 6 et 10, ainsi que les électrodes 7 et 11. A l'opposé de la figure 1, qui montrait la pince en position de repos, la figure 2 montre une partie de la pince lorsqu'un câble C est introduit dans ladite pince pour y être dénudé. Ce câble C est représenté, sur la figure, en section rabattue.

On voit sur cette figure, le bloc isolant 14 avec sa partie fixe 14B et sa partie mobile 14A reliée toutes deux par l'articulation 16. La lame de ressort 22 fixée sur la partie fixe 14B est en appui sur la partie mobile 14A du bloc isolant 14, permettant ainsi le contact de l'électrode 11 sur le câble C. Ainsi, le câble C à dénuder est positionné entre les deux électrodes 7 et 11, la force d'application de l'électrode 11 étant dépendante uniquement de la force d'application du ressort 22 sur la partie mobile 14A.

On a représenté également sur la figure 2, une plaquette 24 qui est fixée sous le bloc isolant 14 de façon à être solidaire de la partie fixe 14B. Cette plaquette 24 comporte une ouverture sous la partie mobile 14A, à travers laquelle est introduit un pion de blocage 26. Ce pion de blocage 26 traverse l'ouverture de la plaquette 24 et est fixé dans la partie mobile 14A du bloc isolant. L'ensemble constitué de la plaquette 24 et du pion de blocage 26 réalise des moyens de butée pour la partie mobile 14A du bloc isolant. Ces moyens de butée ont deux rôles essentiels : leur premier rôle est de limiter le mouvement de la partie mobile afin de ne pas dépasser la limite élastique de la lame de ressort 22. Le second rôle de ces moyens de butée 24/26 est de permettre la remise en position de repos de ladite partie mobile, c'est-à-dire le réalignement de la partie mobile 14A sur la partie fixe 14B et donc des parties mobiles 10A, 12A sur les parties fixes des tiges 10 et 12, lorsque le câble C a été dénudé.

De plus, la butée de réglage (référencée 28 sur la figure 1) a un rôle de sécurité vis-à-vis des moyens de butée 24/26 : la butée de réglage 28 est réglée de façon à ce que, lorsque les électrodes 7 et 11 sont appliquées sur le câble, le pion de blocage 26 ne soit pas en contact avec la plaquette 24, ce qui assure le contrôle de la force appliquée par les électrodes sur le câble.

Aussi, cette butée de réglage située entre les deux poignées de la pince ayant été correctement réglée (comme expliqué précédemment), le pion de blocage 26 n'est pas en contact avec la plaquette 24, ce qui assure que la force exercée par l'électrode 11 sur le câble C correspond bien à la valeur de la force choisie par l'opérateur. Cette valeur de la force d'application de l'électrode 11 sur le câble C varie en fonction de l'élasticité de la lame de ressort 22. En effet, les moyens 23 de fixation de la lame de ressort sur la partie fixe 14B peuvent être par exemple un système à vis, c'est-à-dire un système permettant un démontage facile de la lame de ressort 22. Aussi, l'opérateur peut utiliser des lames de ressorts de raideurs différentes suivant les cas d'utilisation, c'est-à-dire suivant le type de câble à dénuder. Selon la lame de ressort utilisée, et compte tenu des frottements entre ladite lame de ressort et la partie mobile 14A, la force exercée par les électrodes 7 et 11 sur le câble C varie entre sensiblement deux Newtons et un peu plus de dix Newtons.

Lorsque l'empreinte effectuée sur le contour de l'isolant du câble C a été réalisée, ledit câble C est retiré d'entre les électrodes 7 et 11 afin de séparer l'âme du conducteur de l'isolant. Les parties mobiles 10A, 12A, 14A des tiges 10 et 12 retournent alors, sous la pression de la lame de ressort 22, à leur position de repos, à savoir que la partie 14A entre en contact avec la plaquette 24. Il y a alors réalignement des tiges 10 et 12 avec la poignée 2 suivant l'axe longitudinal de la pince à dénuder.

La mise en oeuvre de cette pince selon l'invention consiste, tout d'abord, à régler la butée de réglage en fonction du type de câble à dénuder. Lorsque cette butée a été réglée, l'opérateur ferme la pince en pressant l'une contre l'autre les deux poignées. Les électrodes entrent alors simultanément en contact avec le câble C, les parties mobiles des tiges supérieures effectuant une rotation par rapport aux parties fixes afin que l'électrode supérieure exerce une force calibrée sur ledit câble. Les électrodes étant électriquement alimentées, une empreinte calibrée est réalisée, sous l'effet de la chaleur produite par lesdites électrodes, sur l'isolant du câble. Le câble est alors retiré de la pince. Au relâchement de ladite pince, les parties mobiles des tiges supérieures se réalignent alors grâce à la plaquette 24 suivant l'axe de la poignée supérieure.

Sur la figure 3, on a représenté une vue de dessus en perspective d'une partie de la pince à dénuder selon un autre mode de réalisation de la liaison souple assurant la rotation de la partie mobile 10A par rapport à la partie fixe de la tige 10. Cette liaison souple comporte pour chaque tige 10, 12 une lame respectivement 17A, 17B réalisée dans un alliage électriquement conducteur et relativement élastique. Ces lames 17A et 17B sont brasées ou fixées mécaniquement entre les parties mobiles 10A, 12A et les parties fixes des tiges 10 et 12. Ces lames 17A et 17B sont réalisées dans un matériau élastique, tel que le bronze ou le bérylium et sont donc aptes à se courber pour permettre une rotation des parties mobiles 10A et 12A par rapport aux parties fixes des tiges 10 et 12.

On a représenté, en traits mixtes, les parties mobiles 10A et 12A en position de repos.

On voit également une partie 4A de la poignée inférieure, ainsi que les tiges 6 et 8 fixées sur ladite poignée.

Pour un tel mode de réalisation, les fils conducteurs 18 et 20 ne sont pas nécessaires puisque les lames 17A et 17B sont électriquement conductrices. Ainsi, l'alimentation en électricité de l'électrode 11 est réalisée directement par l'intermédiaire des tiges 10 et 12 des lames 17A et 17B.

On comprendra, bien entendu, que le fonctionnement d'une pince à dénuder comportant ce mode de réalisation est quasiment identique à celui décrit précédemment lors de la description des figures 1 et 2, seule la valeur de la raideur de la lame de ressort 22 pouvant différentier selon l'un ou l'autre des modes de réalisation afin de tenir compte de l'élasticité des lames 17A et 17B.

## Revendications

1. Pince pour dénuder des câbles électriques comportant :
- au moins deux éléments chauffants (7, 11) ;
- des moyens de serrage (2, 4, 6, 8, 10, 12) pour rapprocher lesdits éléments chauffants ;
- des moyens (16) de liaison pour établir une liaison souple entre un premier élément chauffant (11) et les moyens de serrage,
caractérisé en ce qu'elle comprend :
- des moyens (22) élastiques agissant entre les moyens de serrage et le premier élément chauffant pour maintenir cet élément chauffant dans une position rapprochée de l'autre élément chauffant tout en permettant un mouvement de recul dudit premier élément chauffant par rapport à l'autre élément chauffant de façon à imposer à la force de contact des éléments chauffants sur le câble électrique, une force d'intensité constante prédéterminée ;
- des moyens de butée (24, 26) limitant le mouvement de recul du premier élément chauffant à une valeur prédéterminée.

2. Pince selon la revendication 1, caractérisée en ce que les moyens élastiques comportent une lame de ressort.

3. Pince selon l'une quelconque des revendications 1 et 2, caractérisée en ce que les moyens de liaison comportent une articulation (16) assurant l'assemblage du premier élément chauffant sur les moyens de serrage.

4. Pince selon l'une quelconque des revendications 1 et 2, caractérisée en ce que les moyens de liaison comportent au moins une lame souple (17) fixée entre le premier élément chauffant et les moyens de serrage.

5. Pince selon l'une quelconque des revendications 1 à 4, caractérisé en ce que les moyens de serrage comportent deux poignées articulées (2, 4) sur lesquelles sont montées au moins deux tiges électriquement conductrices.

6. Pince selon la revendication 5, caractérisée en ce qu'elle comprend au moins une butée réglable (28) située entre les deux poignées.

7. Pince selon l'une quelconque des revendications 1 à 6, caractérisée en ce que les éléments chauffants sont des électrodes.

## Patentansprüche

1. Zange zum Abisolieren von elektrischen Kabeln, die folgende Bestandteile hat:
- mindestens zwei Heizelemente (7, 11);
- Preßteile (2, 4, 6, 8, 10, 12) zum Zusammendrücken der Heizelemente ;
- Verbindungsteile (16) zur Herstellung einer flexiblen Verbindung zwischen dem ersten Heizelement (11) und den Preßteilen,
dadurch gekennzeichnet, daß diese folgendes umfaßt:
- elastische Teile (22), die zwischen den Preßteilen und dem ersten Heizelement wirken, um dieses Heizelement in der Nähe des anderen Heizelements zu halten, wobei eine Rückbewegung des genannten ersten Heizelements in bezug auf das andere Heizelement in der Weise ermöglicht wird, daß die Berührungskraft der Heizelemente, eine vorgegebene Kraft mit konstanter Stärke, auf das elektrische Kabel übertragen wird;
- Anschlagteile (24, 26), die die Rückbewegung der ersten Heizelements auf einen vorgegebenen Wert begrenzen.

2. Zange nach Anspruch 1, dadurch gekennzeichnet, daß die elastischen Teile ein Federblatt enthalten.

3. Zange nach einem der Ansprüche 1 und 2, dadurch gekennzeichnet, daß die Verbindungsteile ein Gelenk (16) enthalten, mit Hilfe dessen das erste Heizelement an den Preßteilen montiert ist.

4. Zange nach einem der Ansprüche 1 und 2, dadurch gekennzeichnet, daß die Verbindungsteile mindestens ein flexibles Blättchen (17) enthalten, das zwischen dem ersten Heizelement und den Preßteilen befestigt ist.

5. Zange nach einem der Ansprüche 1 bis 4, dadurch gekennzeichnet, daß die Preßteile zwei Gelenkgriffe (2, 4) enthalten, an denen mindestens zwei elektrisch leitende Stäbe montiert sind.

6. Zange nach Anspruch 5, dadurch gekennzeichnet, daß diese Zange mindestens einen einstellbaren Anschlag (28) besitzt, der sich zwischen den beiden Griffen befindet.

7. Zange nach einem der Ansprüche 1 bis 6, dadurch gekennzeichnet, daß die Heizelemente Elektroden sind.

## Claims

1. Tongs for stripping electrical cables comprising at least two heating elements (7, 11), tightening means (2, 4, 6, 8, 10, 12) for moving together said heating elements and connection means (16) for establishing a flexible connection between a first heating element (11) and the tightening means, characterized in that it comprises elastic means (22) acting between the tightening means and the first heating element in order to maintain the latter in a position close to the other heating element, whilst still permitting a withdrawal movement of said first heating element with respect to the other heating element, so as to impose on the contact force of the heating elements on the electrical cable a predetermined force of constant intensity and abutment means (24, 26) limiting the withdrawal movement of the first heating element to a predetermined value.

2. Tongs according to claim 1, characterized in that the elastic means comprise a spring blade.

3. Tongs according to one of the claims 1 and 2, characterized in that the connection means comprise an articulation (16) ensuring the assembly of the first heating element on the tightening means.

4. Tongs according to one of the claims 1 and 2, characterized in that the connection means comprise at least one flexible blade (17) fixed between the first heating element and the tightening means.

5. Tongs according to any one of the claims 1 to 4, characterized in that the tightening means comprise two articulated handles (2, 4) on which are mounted at least two electrically conductive rods.

6. Tongs according to claim 5, characterized in that it comprises at least one regulatable abutment (28) located between the two handles.

7. Tongs according to any one of the claims 1 to 6, characterized in that the heating elements are electrodes.
